# EUROPÄISCHE PATENTSCHRIFT

(11) **EP 1 134 447 B1**
(45) Veröffentlichungstag und Bekanntmachung des Hinweises auf die Patenterteilung: **30.05.2007**
(21) Anmeldenummer: 01106301.3
(22) Anmeldetag: 15.03.2001
(51) Int. Cl.: F16D 21/06, F16D 25/10

(54) **Doppelkupplungsanordnung**
Double clutch arrangement
Configuration de double embrayage

(30) Priorität: 16.03.2000 DE 10012808
(43) Veröffentlichungstag der Anmeldung: 19.09.2001
(73) Patentinhaber: ZF Sachs AG, 97424 Schweinfurt (DE)
(72) Erfinder: Grosspietsch, Wolfgang, Dipl.-Ing., 97421 Schweinfurt (DE); Ebert, Angelika, 97421 Schweinfurt (DE); Heiartz, Markus, Dipl.-Ing., 97422 Schweinfurt (DE); Reisser, Wolfgang, Dipl.-Ing., 97526 Sennfeld (DE); Dau, Andreas, Dipl.-Ing., 97080 Würzburg (DE); Kraus, Paul, Dipl.-Ing., 97464 Niederwerrn (DE); John, Thomas, Dipl.-Ing., 97529 Sulzheim (DE)

(56) Entgegenhaltungen:
- DE-A- 1 505 577
- FR-A- 1 036 741
- FR-A- 2 539 683
- GB-A- 751 286
- GB-A- 1 348 645
- US-A- 2 993 576

## Beschreibung

Die vorliegende Erfindung betrifft eine Doppelkupplungsanordnung, nach dem Oberbegriff des Anspruchs 1.

Eine Doppelkupplungsanordnung ist beispielsweise aus der EP 0 185 176 A1 bekannt. Bei dieser Doppelkupplungsanordnung liegen die beiden zur Herstellung jeweiliger Einrückzustände der verschiedenen Kupplungsbereiche zu betätigenden Kraftspeicher an dem gleichen axialen Endbereich der Doppelkupplungsanordnung und sind jeweils unabhängig voneinander durch jeweilige an diesen über Drehentkopplungslager angreifende Betätigungsmechanismen ansteuerbar. Die Betätigungsmechanismen sind dabei an einem sich nicht drehenden, feststehenden Bauteil abgestützt, um das Gesamtträgheitsmoment der Kupplungsanordnung so gering als möglich zu halten. Beide Kraftspeicher werden durch den jeweils zugehörigen Betätigungsmechanismus in der gleichen Richtung mit einer Betätigungskraft beaufschlagt. Dies bedeutet letztendlich, dass in einem Zustand, in welchem beispielsweise beide Kupplungsbereiche in einem schlupfenden Zustand gehalten werden sollen oder beispielsweise beide Kupplungsbereiche in einem ausgerückten Zustand gehalten werden sollen, je nach dem, ob die Kupplungsbereiche gedrückte oder gezogene Kupplungen darstellen, die beiden durch die Betätigungsmechanismen erzeugten Betätigungskräfte sich konstruktiv addieren. Da die Betätigungsmechanismen nicht innerhalb der Kupplungsanordnung abgestützt sind, sondern zur Entkopplung bezüglilch der Kupplungsanordnung an einem feststehenden Bauteil abgestützt sind, entstehen durch die Addition der beiden Betätigungskräfte erhebliche Beaufschlagungen verschiedener Lagerbereiche, beispielsweise der Lagerbereiche einer als Antriebsglied wirkenden Kurbelwelle.

Aus der US-A-2 712 373 ist eine Doppelkupplungsanordnung bekannt, bei welcher dieses Problem dadurch vermieden wird, dass Reaktionskräfte innerhalb der Kupplung aufgefangen werden. Zu diesem Zwecke werden die beiden Kupplungsbereiche bzw. Anpressplatten derselben durch in Verbindung mit dem Kupplungsgehäuse gebildete Kolben/Zylinderanordnungen betätigt, um somit einander entgegengesetzt gerichtete Einrückkräfte zu erzeugen. Die Kupplungsbereiche weisen keine voneinander unabhängig wirkende Kraftspeicher auf, es ist lediglich durch eine beide Anpressplatten vorspannende Federanordnung dafür gesorgt, dass diese in eine Ausrücklage gebracht werden. Diese Federanordnung, die in Form von Schraubendruckfedern ausgebildet ist, erfüllt daher letztendlich nur die Funktion einer Lüftkrafterzeugungsanordnung.

Aus der DE-1505577 ist eine Doppelskupplungsanordnung nach dem Oberbegriff des Anspruchs 1 bekannt.

Es ist die Aufgabe der vorliegenden Erfindung eine gattungsgemäße Doppelkupplungsanordnung derart weiterzubilden, dass die bei Betätigung derselben erzeugten Reaktionskräfte nicht zu Überlastungen in Lagerbereichen, insbesondere im Lagerbereich von Kurbelwellenlagern, führen.

Erfindungsgemäß wird diese Aufgabe gelöst durch eine Doppelkupplungsanordnung, welche die Merkmale des Anspruchs 1 umfasst.

Da also bei der vorliegenden Erfindung die jeweiligen Betätigungskräfte, die entgegen verschiedenen Kraftspeichern wirken, einander entgegengesetzt gerichtet sind, kann nicht der Zustand auftreten, in dem durch Erzeugung beider Betätigungskräfte eine Überlastung von Lagerbereichen entsteht, da die beiden Betätigungskräfte sich dann zumindest teilweise kompensieren.

Beispielsweise kann der erfindungsgemäße Aufbau derart sein, dass der erste Kupplungsbereich eine erste Anpressplatte aufweist, die zur Herstellung eines Einrückzustands des ersten Kupplungsbereichs in einer ersten Richtung verlagerbar ist, dass der zweite Kupplungsbereich eine zweite Anpressplatte aufweist, die zur Herstellung eines Einrückzustands des zweiten Kupplungsbereichs in einer der ersten Richtung im Wesentlichen entgegengesetzten zweiten Richtung verlagerbar ist, und dass die erste Betätigungskraft im Wesentlichen gleichgerichtet zur ersten Richtung ist und die zweite Betätigungskraft im Wesentlichen gleichgerichtet zur zweiten Richtung ist. Dies bedeutet letztendlich, dass bei einem derartigen Aufbau zwei in axialer Richtung spiegelverkehrt aufgebaute Kupplungen des gedrückten Typs die erfindungsgemäße Doppelkupplungsanordnung bilden.

Gemäß einer alternativen Variante ist es möglich, dass der erste Kupplungsbereich eine erste Anpressplatte aufweist, die zur Herstellung eines Einrückzustands des ersten Kupplungsbereichs in einer ersten Richtung verlagerbar ist, dass der zweite Kupplungsbereich eine zweite Anpressplatte aufweist, die zur Herstellung eines Einrückzustands des zweiten Kupplungsbereichs in einer der ersten Richtung im Wesentlichen entgegengesetzten zweiten Richtung verlagerbar ist, und dass die erste Betätigungskraft zur ersten Richtung im Wesentlichen entgegengesetzt gerichtet ist und die zweite Betätigungskraft zur zweiten Richtung im Wesentlichen entgegengesetzt gerichtet ist. In Abweichung zum vorangehend angegebenen Konzept sind hier nunmehr zwei Bereiche des gezogenen Kupplungstyps vorgesehen.

Bei einer weiteren alternativen Ausgestaltungsvariante kann vorgesehen sein, dass der erste Kupplungsbereich eine erste Anpressplatte aufweist, die zur Herstellung eines Einrückzustands des ersten Kupplungsbereichs in einer Richtung verlagerbar ist, dass der zweite Kupplungsbereich eine zweite Anpressplatte aufweist, die zur Herstellung eines Einrückzustands des zweiten Kupplungsbereichs in derselben Richtung verlagerbar ist, und dass bei einem der Kupplungsbereiche die Betätigungskraft zur Richtung gleichgerichtet ist und bei dem anderen der Kupplungsbereiche die Betätigungskraft der Richtung entgegengesetzt gerichtet ist. Dies gibt nunmehr eine Variante an, bei welcher hintereinander zwei letztendlich gleichgerichtet aufgebaute Kupplungsbereiche vorgesehen sind, von welchen einer vom gezogenen und der andere vom gedrückten Typ ist.

Weiter ist es bei dem erfindungsgemäßen Aufbau vorteilhaft, wenn bei wenigstens einem der Kupplungsbereiche die zugehörige Anpressplatte durch den zugehörigen Kraftspeicher in eine Einrücklage vorgespannt ist. Alternativ zu oder in Kombination mit diesem Aspekt kann vorgesehen sein, dass bei wenigstens einem der Kupplungsbereiche der zugehörige Kraftspeicher in eine Ausrücklage vorgespannt ist und durch Erzeugung der entsprechenden Betätigungskraft entgegen seiner Vorspannkraft in eine Einrücklage bringbar ist.

Um in möglichst einfacher Art und Weise die Betätigungskraft in die Doppelkupplungsanordnung einleiten zu können, wird vorgeschlagen, dass einer der Betätigungsmechanismen ein in einem der Abtriebsglieder zur Beaufschlagung des zugehörigen Kraftspeichers axial bewegbar angeordnetes Betätigungsorgan aufweist. Weiter kann dazu vorgesehen sein, dass einer der Betätigungsmechanismen ein radial außerhalb der Abtriebsglieder, vorzugsweise axial bewegbares Betätigungsorgan aufweist.

Bei der erfindungsgemäßen Doppelkupplungsanordnung ist weiter vorzugsweise vorgesehen, dass jeder Kupplungsbereich eine Kupplungsscheibenanordnung mit wenigstens einem Reibbelagträger umfasst. Ferner ist es zum Beibehalt einer gleichbleibenden Kupplungscharakteristik vorteilhaft, wenn wenigstens einer der Kupplungsbereiche mit einer Verschleißkompensationsanordnung versehen ist.

Bei dem erfindungsgemäßen Aufbau einer Doppelkupplungsanordnung ist ferner vorzugsweise vorgesehen, dass der erste Betätigungsmechanismus und der zweite Betätigungsmechanismus reaktionskraftmäßig nicht an der Doppelkupplungsanordnung abgestützt sind. Dies ermöglicht einen von der Ausgestaltung der Betätigungsmechanismen im Wesentlichen unabhängigen Aufbau der Doppelkupplungsanordnung, die dann in beliebiger Art und Weise mit von außen her eine Betätigungskraft in die Doppelkupplungsanordnung einleitenden Betätigungsmechanismen gekoppelt werden kann.

Bei der erfindungsgemäßen Doppelkupplungsanordnung ist ferner vorzugsweise vorgesehen, dass durch den ersten Betätigungsmechanismus und durch den zweiten Betätigungsmechanismus jeweils unabhängig vom anderen Betätigungsmechanismus eine Betätigungskraft erzeugt werden kann.

Die vorliegende Erfindung betrifft ferner eine Doppelkupplungsanordnung, welche die Merkmale des Anspruchs 13 umfasst.

Gemäß einem weiteren Aspekt betrifft die vorliegende Erfindung eine Doppelkupplungsanordnung, umfassend: einen ersten Kupplungsbereich, durch welchen wahlweise eine Drehmomentübertragungsverbindung zwischen einem Antriebsglied und einem ersten Abtriebsglied herstellbar ist, einen zweiten Kupplungsbereich, durch welchen wahlweise eine Drehmomentübertragungsverbindung zwischen dem Antriebsglied und einem zweiten Abtriebsglied herstellbar ist, sowie bei jedem der Kupplungsbereiche eine jeweilige Kupplungsscheibenanordnung mit wenigstens einem Reibbelag.

Dabei ist weiter vorgesehen, dass bei wenigstens einer der Kupplungsscheibenanordnungen wenigstens ein Reibbelag aus Sintermaterial vorgesehen ist.

Sintermaterial weist im Vergleich zu herkömmlichen Reibbelägen einen höheren Reibkoeffizienten auf, so dass die damit übertragenen oder übertragbaren Drehmomente bei gleicher Baugröße erhöht werden können.

Gemäß einem vorteilhaften Aspekt kann dabei dann vorgesehen sein, dass die beiden Kupplungsscheibenanordnungen unterschiedlich große Reibflächen bereitstellen oder/und im Bereich ihrer Reibbeläge unterschiedliche Radialabmessungen aufweisen und dass an der Kupplungsscheibenanordnung mit der kleineren Reibfläche oder/und der kleineren Radialabmessung wenigstens ein Reibbelag aus Sintermaterial vorgesehen ist.

Der Kupplungsbereich mit der kleineren Reibfläche bzw. der kleineren Radialabmessung im Bereich der Reibbeläge, bei welchem dann ein Reibbelag aus Sintermaterial vorgesehen ist, kann beispielsweise derjenige Kupplungsbereich sein, welcher bei Anfahrvorgängen nicht genutzt wird. Das bei Einsatz von Sinterreibbelägen auftretende raue Eingriffsverhalten beeinträchtigt somit nicht den vor allem bei Personenfahrzeugen unbedingt geforderten Anfahrkomfort, ermöglicht es jedoch, die bei Gangwechselvorgängen wirksam werdende Kupplung mit kleinerer Baugröße auszugestalten. Selbstverständlich ist es ebenso möglich, bei im Wesentlichen gleich groß gebauten Kupplungsbereichen, d.h. im Wesentlichen einander entsprechenden Kupplungsscheibenanordnungen, denjenigen Kupplungsbereich, der eine Kupplungsscheibenanordnung mit Sinterbelag aufweist, als Gangwechselkupplung und nicht als Anfahrkupplung einzusetzen.

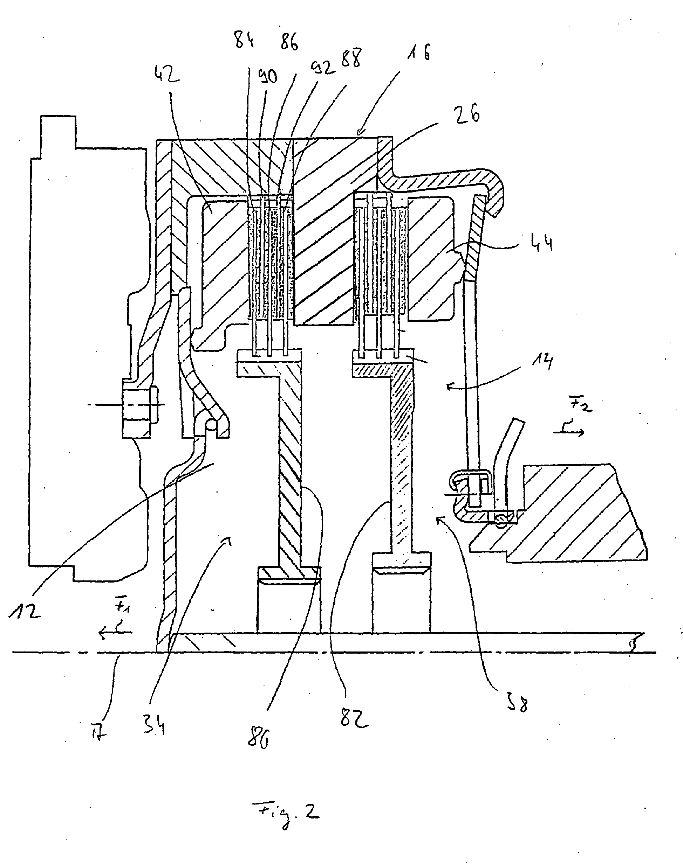

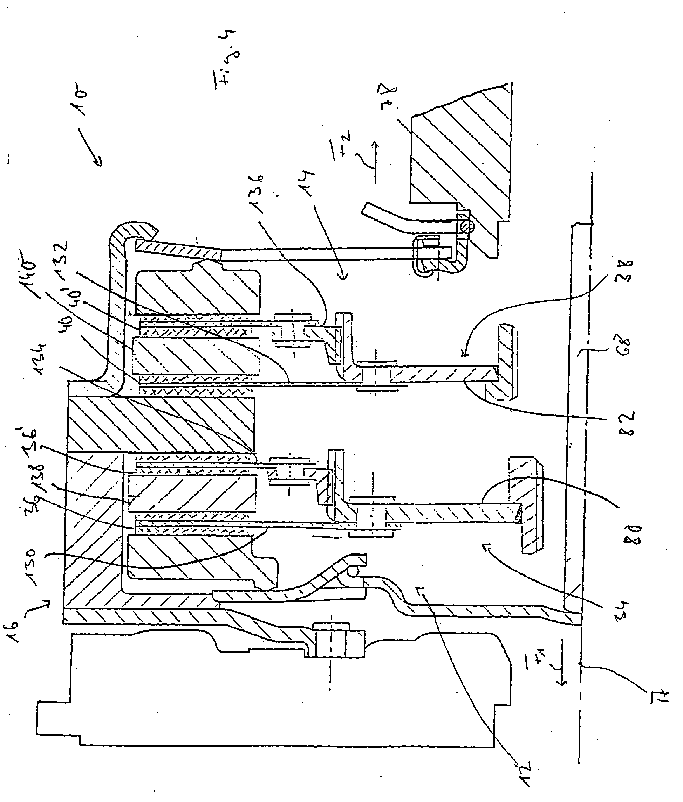

Es sei ferner noch darauf hingewiesen, dass, insofern hier von Kupplungsscheibenanordnungen die Rede ist, selbstverständlich nicht nur sogenannte Einscheibenkupplungsbereiche angesprochen sind, sondern ebenso Mehrscheibenkupplungsbereiche, wie beispielsweise in der anliegenden Fig. 4 dargestellt, oder Kupplungsscheibenanordnungen mit der Mehrzahl von Lamellen, wie beispielsweise in der anliegenden Fig. 2 dargestellt.

Die vorliegende Erfindung wird nachfolgend mit Bezug auf die beiliegenden Zeichnungen anhand bevorzugter Ausgestaltungsformen detailliert beschrieben. Es zeigt:
- Fig. 1: eine Teil-Längsschnittansicht einer Doppelkupplungsanordnung gemäß einer ersten Ausgestaltungsform;
- Fig. 2: eine Abwandlung der in Fig. 1 dargestellten Doppelkupplungsanordnung, bei welcher die Kupplungsscheiben jeweilige Pakete von Kupplungslamellen umfassen;
- Fig. 3: eine weitere Abwandlung der in Fig. 1 dargestellten Doppelkupplungsanordnung, bei welcher die beiden Kupplungsbereiche jeweils mit einer Verschleißkompensationsanordnung versehen sind;
- Fig. 4: eine weitere Abwandlung der in Fig. 1 dargestellten Doppelkupplungsanordnung, bei welcher die Kupplungsscheiben der beiden Kupplungsbereiche jeweils als Doppelkupplungsscheiben ausgebildet sind;
- Fig. 5: eine erste alternative Ausgestaltungsvariante der erfindungsgemäßen Doppelkupplungsanordnung;
- Fig. 6: eine zweite alternative Ausgestaltungsvariante der erfindungsgemäßen Doppelkupplungsanordnung.

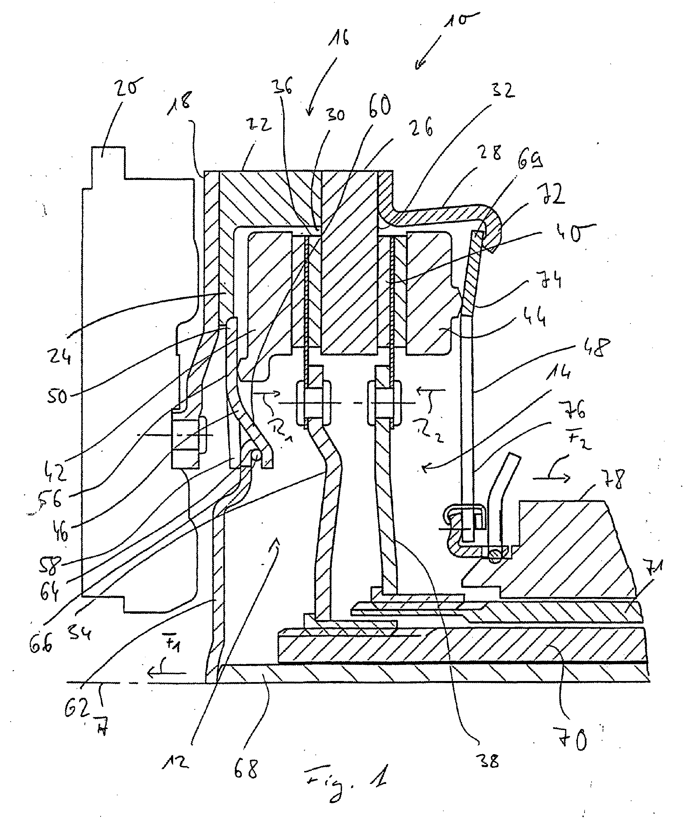

Eine Doppelkupplungsanordnung 10 gemäß einer ersten Ausgestaltungsvariante ist in Fig. 1 dargestellt. Die Doppelkupplung 10 umfasst zwei Kupplungsbereiche 12, 14, die, wie im Folgenden beschrieben, wahlweise und voneinander unabhängig ein- bzw. ausgerückt werden können. Ferner umfasst die Doppelkupplungsanordnung 10 eine allgemein mit 16 bezeichnete Gehäuseanordnung. Ein erstes Gehäuseteil 18 als Eingangsteil ist zur Anbindung an eine Schwungmasse, beispielsweise die Sekundärmasse 20 eines Zweimassenschwungrads oder ggf. direkt an eine Antriebswelle, beispielsweise eine Kurbelwelle, ausgebildet. Mit diesem Eingangsteil 18 ist ein näherungsweise topfartig ausgebildetes Gehäuseteil 22 verbunden, das sich mit einem flanschartigen Abschnitt 24 nach radial innen erstreckt. Ferner ist mit dem Eingangsteil 18 und dem Gehäuseteil 22 ein Zwischenscheibenelement 26 mit im Wesentlichen ringartiger Struktur verbunden. Auch ein Gehäuseabschlussteil 28 mit im Wesentlichen ringförmiger Struktur ist mit dem Eingangsteil 18 verbunden. Auch diese Komponenten können beispielsweise durch in den Figuren nicht dargestellte Schraubbolzen o. dgl. fest miteinander verbunden sein. Das Zwischenscheibenelement 26 bildet mit seinen beiden axialen Stirnseiten 30, 32 jeweils eine Widerlagerfläche oder Reibfläche für den ersten Kupplungsbereich 12 bzw. den zweiten Kupplungsbereich 14. Gegen die Widerlagerfläche 30 ist eine allgemein mit 34 bezeichnete Kupplungsscheibe des ersten Kupplungsbereichs 12 mit ihren Reibbelägen 36 pressbar. In entsprechender Weise ist gegen die Widerlagerfläche 32 eine allgemein mit 38 bezeichnete Kupplungsscheibe des Kupplungsbereichs 14 mit ihren Reibbelägen 40 pressbar. Der erste Kupplungsbereich 12 weist ferner eine in dem Gehäuse 16 axial verlagerbar, bezüglich diesem jedoch im Wesentlichen drehfest gehaltene Anpressplatte 42 auf. Beispielsweise kann die Anpressplatte 42 bezüglich des Gehäuseteils 22 oder einem anderen der Gehäuseteile durch sogenannte sich näherungsweise in Umfangsrichtung erstreckende Tangentialblattfedern gehalten sein. Auch dem Kupplungsbereich 14 ist eine Anpressplatte 44 zugeordnet, die im Gehäuse 16 wiederum axial verlagerbar, im Wesentlichen jedoch drehfest gehalten ist. Auch hier können zu dem Gehäuseabschlussteil 28 hin Tangentialblattfedern vorgesehen sein, die diese Bewegbarkeit bzw. Drehverkopplung bereitstellen.

Die beiden Anpressplatten 42, 44 stehen jeweils unter der Beaufschlagung von Kraftspeichern 46, 48. Der dem ersten Kupplungsbereich 12 zugeordnete Kraftspeicher 46 stützt sich in seinem radial äußeren Bereich 50 an dem flanschartigen Abschnitt 24 des Gehäuseteils 22 ab und stützt sich in einem radial weiter innen liegenden Beaufschlagungsbereich 56 an einem Schneidenbereich der Anpressplatte 42 ab. Der Kraftspeicher 46 ist dabei derart ausgebildet, dass er die Anpressplatte 42 in Richtung auf das Zwischenscheibenlement 26 zu vorspannt, so dass in seinem freigegebenen Zustand die Kupplungsscheibe 34 des ersten Kupplungsbereichs 12 an das Gehäuse 16 und somit an die Antriebswelle drehfest angekuppelt ist.

In seinem radial inneren Bereich ist der Kraftspeicher 46, der beispielsweise nach Art einer Membran oder Tellerfeder ausgebildet sein kann, mit einer Mehrzahl von axial zueinander versetzten Federzungen 58, 60 ausgebildet. In den zwischen diesen Federzungen 58, 60 gebildeten axialen Zwischenraum greift ein Beaufschlagungsteller 62 ein, welcher mit umgebogenen Endabschnitten 64 einen Drahtring 66 umgreift. Durch den Drahtring 66, der beispielsweise nach radial außen vorgespannt sein kann, ist eine axial feste Verbindung zwischen dem inneren Endbereich des Kraftspeichers 46 und dem Beaufschlagungsteller 62 geschaffen.

Der Beaufschlagungsteller 62 kann axial durch ein Betätigungsorgan 68 verschoben werden. Dieses Betätigungsorgan 68 erstreckt sich koaxial innerhalb einer ersten Abtriebswelle 70, die mit der Kupplungsscheibe 34 des ersten Kupplungsbereichs 12 drehfest verbunden ist. Am nicht dargestellten anderen Endbereich des Betätigungsorgans 68 kann auf dieses eine Betätigungskraft F₁ übertragen werden, beispielsweise durch einen in einem Getriebe liegenden Betätigungshebelmechanismus oder durch Erzeugung eines Hydraulikdrucks, wobei dann das Betätigungsorgan 68 bzw. die Betätigungsstange 68 eine Kolbenstange für ein derartiges Kolben/Zylindersystem bildet. Die Betätigungsstange 68 überträgt die Betätigungskraft F₁, welche letztendlich die Ausrückkraft für den ersten Kupplungsbereich 12 ist, auf den Beaufschlagungsteller 62 und dieser nimmt bei seiner axialen Bewegung den radial inneren Bereich des Kraftspeichers 46 in der Darstellung der Fig. 1 nach links mit. Dadurch wird die Beaufschlagung der Anpressplatte 42 zumindest teilweise aufgehoben, und diese kann beispielsweise bedingt durch die durch die Tangentialblattfedern o. dgl. erzeugte Vorspannkraft von der Kupplungsscheibe 12 abheben. Zur Herstellung des eingerückten Zustands wird der Kraftspeicher 46 freigegeben und dieser presst die Anpressplatte 42 dann in der Richtung R, in Richtung auf das Zwischenscheibenelement 26 zu.

Auch der Kraftspeicher 48 des zweiten Kupplungsbereichs 14 stützt sich in seinem radial äußeren Bereich 69 ab, nämlich an dem Gehäuseabschlussteil 28 bzw. einem umgebogenen Abstützrandabschnitt 72 desselben. Radial weiter innen liegend beaufschlagt der Kraftspeicher 48 mit seinem Beaufschlagungsabschnitt 74 dann die Anpressplatte 44 in einem Schneidenbereich derselben. In seinen radial innen liegenden Endbereichen sind Federzungen 76 desselben mit einem weiteren Betätigungsorgan 78 axial festgekoppelt. Auch dieses Betätigungsorgan 78 kann durch entsprechende Krafterzeugung, beispielsweise auf hydraulische oder mechanische Weise, in axialer Richtung verschoben werden und dabei die Federzungen 76 bei Erzeugung einer Betätigungskraft F₂ in der Darstellung der Fig. 1 nach rechts mitnehmen. In diesem Falle wird dann die Beaufschlagung der Anpressplatte 44 zumindest teilweise aufgehoben, so dass der Kupplungsbereich 14 in seinen ausgerückten Zustand gebracht werden kann. Werden die Federzungen 76 freigegeben, so presst der Kraftspeicher 48 die Anpressplatte 44 in Richtung R₂ auf das Zwischenscheibenelement 26 zu, um den zweiten Kupplungsbereich 14 in seinen eingerückten Zustand zu bringen.

Man erkennt aus der vorangehenden Beschreibung, dass für die beiden Kupplungsbereiche 12, 14 jeweils Betätigungskräfte F₁ bzw. F₂ durch jeweilige Betätigungsmechanismen, repräsentiert durch die Betätigungsorgane 68, 78, erzeugt werden, welche Betätigungskräfte F₁, F₂ zueinander im Wesentlichen entgegengesetzt gerichtet sind. Daraus resultiert im Betrieb der wesentliche Vorteil, dass dann, wenn beide Kupplungsbereiche 12, 14 in einen ausgerückten Zustand zu bringen sind, die Betätigungskräfte F₁, F₂ sich zumindest teilweise kompensieren, so dass keine durch Aufaddierung dieser Kräfte entstehende übermäßige Lagerbelastung insbesondere im Bereich einer Antriebswelle entstehen kann. Ist lediglich eine der Kupplungen in einen ausgerückten Zustand zu bringen, so wird lediglich durch einen der Betätigungsmechanismen die entsprechende Betätigungskraft erzeugt, so dass die dann auf Lager einwirkenden Kräfte ohnehin geringer sind. Dieser Vorteil ergibt sich trotz der Tatsache, dass durch die Betätigungsorgane 68, 78 die Betätigungskräfte F₁, F₂ von außen her in die Doppelkupplungsanordnung 10 eingeleitet werden, d.h. die Reaktionskraft wird nicht innerhalb des Gehäuses 16 oder der Doppelkupplung 10 abgefangen, sondern wird beispielsweise innerhalb des Getriebes oder an einem Getriebegehäuse abgefangen. Auch die Kupplungsscheibe 38 ist mit einer Getriebeeingangswelle 71 drehfest verbunden, welche die bereits angesprochene Getriebewelle 70 koaxial umgibt.

Es sei darauf hingewiesen, dass selbstverständlich die beiden Kupplungsbereiche 12, 14, die hier als sogenannte gezogene Kupplungsbereiche dargestellt sind, ebenso als gedrückte Kupplungsbereiche ausgebildet sein könnten. In diesem Falle wären die beiden Betätigungskräfte F₁, F₂ genau in der entgegengesetzten Richtung gerichtet, wie in Fig. 1 dargestellt und die Kraftspeicher wären im radial äußeren Bereich jeweils an den Anpressplatten und in einem radial mittleren Bereich jeweils am Gehäuse abzustützen. Auch dabei wird der gleiche Vorteil erhalten, nämlich dass die Betätigungskräfte bei gleichzeitiger Betätigung beider Kupplungen einander zumindest teilweise kompensieren.

Bei der in Fig. 1 dargestellten Doppelkupplungsanordnung 10 können selbstverständlich verschiedenste Variationen vorgenommen werden. So können die beiden Kupplungsscheiben 34, 38 mit einem Torsionsschwingungsdämpfer versehen sein oder sie können, wie in Fig. 2 dargestellt, jeweilige Innenlamellenträger aufweisen, die mit den Getriebeeingangswellen 70, 71 der Fig. 1 drehfest gekoppelt werden können, und die außen drehfest, jedoch axial verlagerbar mehrere Innenlamellen 84, 86, 88 tragen. Jede dieser innenlamellen weist, ebenso wie die in Fig. 1 dargestellten Kupplungsscheiben, einen jeweiligen Belagträger mit daran getragenen Reibbelägen auf. Zwischen diese Innenlamellen 84, 86, 88 greifen dann Außenlamellen 90, 92 ein, die mit dem Gehäuse 16 drehfest verbunden sind. Diese Lamellenpakete 84, 86, 88, 90, 92 werden dann, ebenso wie vorangehend beschrieben die Reibbeläge 36, 40, zwischen dem Zwischenscheibenelement 26 und der jeweiligen Anpressplatte 42 bzw. 44 geklemmt, wenn der entsprechende Kupplungsbereich 12 oder 14 in einen eingerückten Zustand gebracht wird. Man erkennt also, dass hier eine nasslaufende Kupplung dargestellt ist, bei welcher das gesamte Kupplungsgehäuse 16 fluiddicht abgeschlossen sein kann oder innerhalb eines fluiddichten Gehäuses angeordnet werden kann.

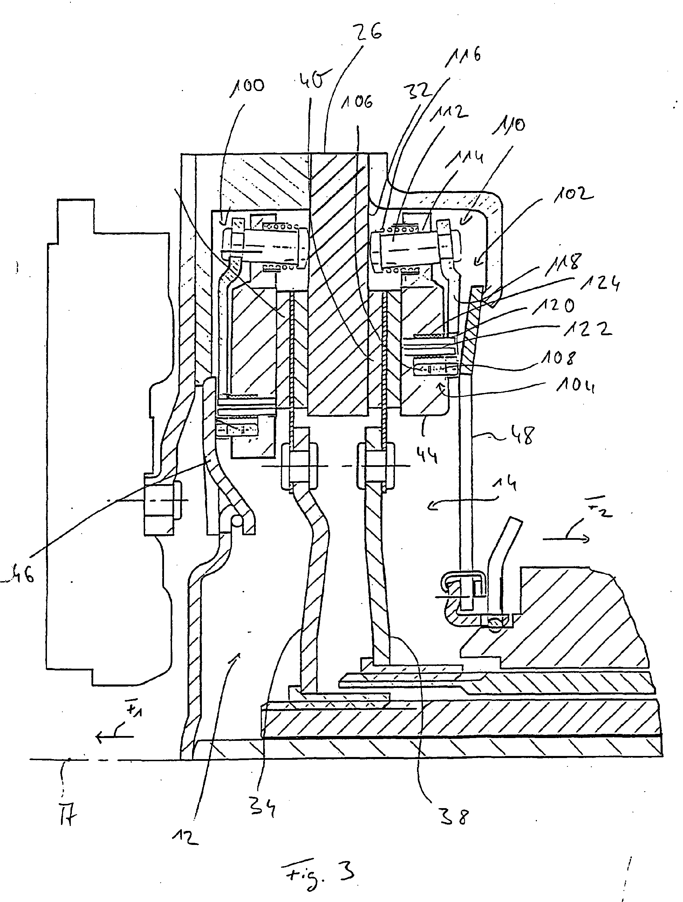

Eine weitere Abwandlung der in Fig. 1 dargestellten Ausgestaltungsvariante ist in Fig. 3 gezeigt. Man erkennt in Fig. 3, dass den beiden Kupplungsbereichen 12, 14 jeweils Verschleißkompensationsanordnungen 100, 102 zugeordnet sind. Diese beiden Verschleißkompensationsanordnungen 100, 102 sind zueinander im Wesentlichen baugleich, so dass im Folgenden lediglich die im Bereich des zweiten Kupplungsbereichs 14 vorgesehene Verschleißkompensationsanordnung 102 beschrieben wird. Es sei bereits hier darauf hingewiesen, dass selbstverständlich jedwede andere Verschleißkompensationsanordnung hier eingesetzt werden kann.

Man erkennt, dass der Kraftspeicher 48 sich nicht mehr unmittelbar an der Anpressplatte 44 abstützt, sondern über eine Verschleißnachstellvorrichtung 104. Diese umfasst zwei bezüglich einander verdrehbare Nachstellringe 106, 108, die an ihren aneinander anliegenden Oberflächenbereichen mit in Umfangsrichtung geneigt verlaufenden Schrägflächenbereichen, d.h. zu einer zur Drehachse A orthogonal stehenden Ebene geneigt verlaufenden Flächenbereichen, versehen sind. Eine Relativverdrehung dieser in Umfangsrichtung bezüglich einander durch eine Federanordnung vorgespannten Nachstellringe 106, 108 führt somit zu einer axialen Erweiterung bzw. Verkürzung dieser Verschleißnachstellvorrichtung 100. Es ist ferner wenigstens ein Spielgeber 110 vorgesehen, welcher mit einem Erfassungsabschnitt 112 eine in der Anpressplatte 44 vorgesehene Öffnung 114 durchsetzt und damit zur Anlage an der Widerlagerfläche 32 kommen kann. Durch eine Vorspannfeder 116 ist der Erfassungsabschnitt 112 in Richtung auf das Zwischenscheibenelement 26 zu vorgespannt. Ein Hebelabschnitt 118 ist mit dem Erfassungsabschnitt 112 fest gekoppelt und ragt nach innen. Der Hebelabschnitt 118 übergreift den Nachstellring 108 radial innen bzw. greift in eine in diesem vorgesehene Aussparung ein. In seinem radial mittleren Bereich weist der Hebelabschnitt 118 eine Öffnung 120 auf, in welche ein an der Anpressplatte 44 festgelegter Bolzen 122 eingreift. Dieser Bolzen 122 ist durch eine sich an der Anpressplatte 44 einerseits und am Hebelabschnitt 118 andererseits abstützende Feder 124 umgeben. Durch diese Feder 124 ist der Spielgeber 110 derart verkippt, dass er in Reibungsklemmsitz in der Öffnung 114 gehalten ist. Durch diesen Reibungsklemmsitz ist eine axiale Verlagerung desselben grundsätzlich behindert, so dass auch die Verschleißnachstellvorrichtung 104, d.h. die Ringe 106, 108, an einer Relativdrehung bezüglich einander gehindert werden.

Tritt nun im Betrieb ein Verschleiß der Reibbeläge 40 auf, so wandert die Anpressplatte 44 zunehmend näher an das Zwischenscheibenelement 26 heran, bis letztendlich der Erfassungsabschnitt 112 an der Widerlagerfläche 32 anstößt. Dadurch wird der Reibungsklemmsitz aufgehoben und der gesamte Spielgeber 110 verlagert sich bezüglich der Anpressplatte 44 derart, dass er mit dem radial inneren Bereich seines Hebelabschnitts 118 von dem Nachstellring 108 geringfügig abhebt. Wird bei einem nachfolgenden Ausrückvorgang der Kraftspeicher 48 bzw. die Membranfeder 48 axial von der Anpressplatte 44 weggezogen, so ist die Anpressplatte 44 gegen den Kraftspeicher 48 im Wesentlichen nur noch durch die Tangentialblattfedern odereine sonstige Lüftkrafterzeugungsanordnungvorgespannt, diese Kraft ist jedoch deutlich geringer als die Vorspannkraft des Kraftspeichers 48. Die Nachstellringe 106, 108 können sich dann bezüglich einander verdrehen, bis ihre Gesamtaxialerstreckung wieder so groß ist, dass der Nachstellring 108 wieder am Hebelabschnitt 118 anstößt. Es ist dann exakt der Verschleiß kompensiert worden, der zuvor durch axiale Verschiebung des Spielgebers 110 bezüglich der Anpressplatte 44 erfasst worden ist.

Wie bereits vorangehend ausgeführt, arbeitet die Verschleißkompensationsanordnung 100 des ersten Kupplungsbereichs in entsprechender Weise, so dass auf die vorangehende Beschreibung verwiesen wird. Durch das Bereitstellen dieser beiden Verschleißkompensationsanordnungen 100, 102 wird dafür gesorgt, dass die Kraftspeicher 46, 48 über die gesamte Betriebslebensdauer einer derartigen Kupplung bzw. der Kupplungsscheiben 34, 38 hinweg eine gleichbleibende Lage und somit eine gleiche Kupplungskraftcharakteristik aufweisen. Auch die aufzubringende Betätigungskraft F₁ bzw. F₂ bleibt somit gleich.

Eine weitere Abwandlung der in Fig. 1 dargestellten Doppelkupplungsanordnung 10 ist in Fig. 4 gezeigt. Man erkennt, dass bei grundsätzlich gleichem Aufbau die Kupplungsscheiben 34, 38 hier als Doppelkupplungsscheiben ausgebildet sind. Auch diese Doppelkupplungsscheiben weisen jeweilige Träger 80, 82 auf. Mit dem Träger 80 bzw. 82 ist ein Belagträger 130 bzw. 132 jeweils fest verbunden. Ein weiterer Belagträger 134 bzw. 136 ist, ebenso wie vorangehend mit Bezug auf die Innenlamellen beschrieben, mit einem radial äußeren verzahnungsartigen Abschnitt der Träger 80, 82 drehfest, jedoch axial verlagerbar verbunden. Zwischen den beiden Reibbelaggruppen 36, 36' bzw. 40, 40' liegt eine jeweilige Zwischenanpressplatte 138 bzw. 140, die mit dem Gehäuse 16, beispielsweise durch Tangentialblattfedern o. dgl., ebenso drehfest, jedoch geringfügig axial verlagerbar verbunden sein können. Auch hier können beispielsweise wiederum Tangentialblattfedern o. dgl. vorgesehen sein, oder es kann ein das Abheben von beiden Reibbelaggruppen 36, 36' bzw. 40, 40' sicherstellender Mechanismus vorgesehen werden. Ansonsten ergeben sich auch bei dieser Ausgestaltungsvariante einer trocken laufenden Mehrscheiben-Doppelkupplungsanordnung 10 die gleichen Funktionsvorteile bei der gegenseitigen Kompensation der Betätigungskräfte F₁, F₂ zumindest bei gleichzeitiger Betätigung beider Kupplungsbereiche 12, 14.

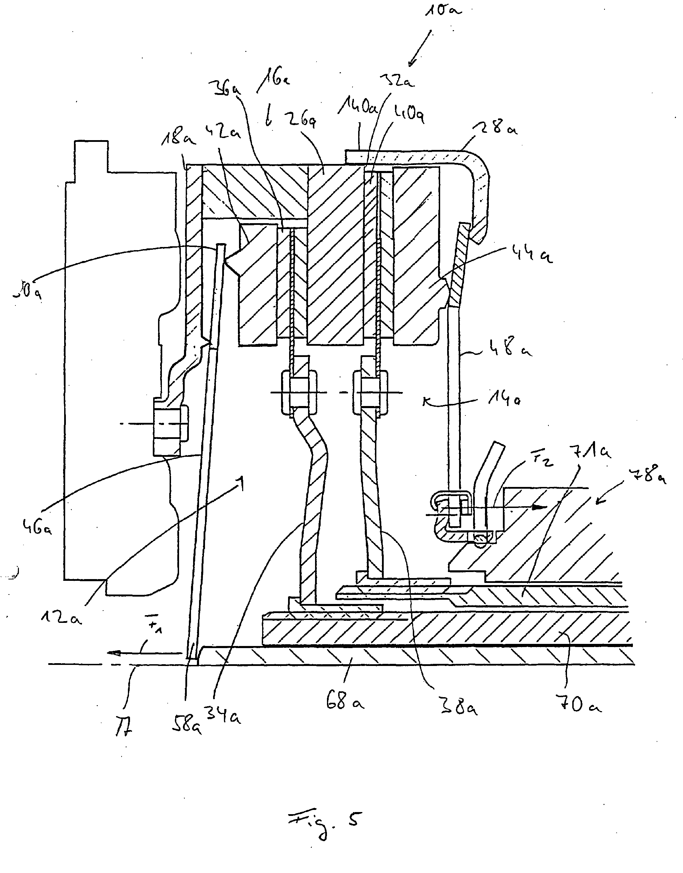

Eine alternative Ausgestaltungsform der erfindungsgemäßen Doppelkupplungsanordnung ist in Fig. 5 dargestellt. Komponenten, welche vorangehend beschriebenen Komponenten hinsichtlich Aufbau bzw. Funktion entsprechen, sind mit dem gleichen Bezugszeichen unter Hinzufügung eines Anhangs "a" beschrieben.

Man erkennt zunächst, dass beim zweiten Kupplungsbereich 14a die Reibbeläge 40a derselben bezüglich dervorangehenden Ausgestaltungsform radial nach außen verlängert sind. Zu diesem Zwecke ist das.Gehäuseabschlussteil 28a hülsenartig ausgebildet und umgreift mit einem zylindrischen Abschnitt 140a das Zwischenscheibenelement 26a radial außen und ist auf dieses beispielsweise aufgeschrumpft, aufgepresst, aufgeschweißt oder aufgenietet. Es kann somit nach radial außen im Wesentlichen die ganze Erstreckungslänge des Zwischenscheibenelements 26a bzw. der Widerlagerfläche 32a desselben genutzt werden. Beispielsweise kann der Kupplungsbereich 14a als Anfahrkupplung genutzt werden, über welchen z.B. die Gänge 1, 3 und R (rückwärts) zu schalten sind. Die dabei auftretende relativ hohe Belastung kann durch eine entsprechende Vergrößerung der aneinander reibenden Flächen besser aufgenommen werden. Bei einer derartigen Ausgestaltungsform kann beispielsweise dann vorgesehen sein, dass bei dem Kupplungsbereich 12a die Kupplungsscheibe 34a, deren Reibbeläge 36a eine kleinere Abmessung bzw. eine kleinere Reibfläche aufweisen, mit wenigstens einem Reibbelag aus Sintermaterial versehen ist. Derartiges Sintermaterial hat gegenüber herkömmlichen Reibbelagmaterialien einen deutlich höheren Reibkoeffizienten und führt somit zu einem raueren Eingriffsverhalten. Trotz der geringeren Abmessung bzw. der kleineren Reibfläche kann dadurch dann ein gleich hohes Drehmoment übertragen werden, wie bei radial größer bauenden Kupplungsscheiben mit herkömmlichen Reibbelägen. Um das raue Eingriffsverhalten im Kupplungsbetrieb nicht spürbar zu machen, kann, wie bereits ausgeführt, der Kupplungsbereich 14a, welcher die herkömmlichen Reibbeläge aufweisen kann, als Anfahrkupplung genutzt werden, d.h. diejenige Kupplung, die vor allem bei Einlegen der Gänge 1 und R wirksam ist. Der Kupplungsbereich 12a kann dann als sogenannte Gangwechselkupplung wirksam sein, welche letztendlich nur während des Fahrbetriebs bei Durchführung von Gangwechselvorgängen betätigt wird. Bei derartigen Gangwechselvorgängen ist das raue Eingriffsverhalten der Sinterbeläge nicht spürbar. Ein wesentlicher Vorteil des Einsatzes von Sinterreibbelägen ist, dass diese eine deutlich höhere Abriebfestigkeit und somit eine deutlich längere Standzeit aufweisen. Als derartige Sintermaterialien kommen grundsätzlich Materialien in Frage, bei welchen in eine Metallmatrix verschiedene Partikel eingebettet sind. Diese Partikel können beispielsweise eine Kombination aus Eisen- oder Bronzepartikel sein, können Keramikoxide sein, oder können Graphite oder Molybdendisulfid sein.

Es wird hier darauf hingewiesen, dass selbstverständlich auch bei den in den anderen Figuren dargestellten Ausgestaltungsformen wenigstens ein Reibbelag aus Sintermaterial bereitgestellt sein kann, insbesondere auch bei denjenigen Ausgestaltungsformen, in welchen die jeweiligen Kupplurigsscheiben bzw. Kupplungsscheibenanordnungen eine größere Anzahl an Reibbelägen aufweisen.

Ein weiterer Unterschied zur vorangehend beschriebenen Ausgestaltungsform ist, dass der Kraftspeicher 46a nunmehr in seinem radial äußeren Bereich 50a die Anpressplatte 42a beaufschlagt und radial innerhalb davon am Gehäuse 16a, beispielsweise dem Eingangsteil 18a, abgestützt bzw. über Distanzbolzen und Drahtringe o. dgl. daran getragen ist. Der Kraftspeicher 46a ist nunmehr ein Kraftspeicher, der durch seine Formgebung in eine Lage vorgespannt ist, die einem ausgerückten Zustand des Kupplungsbereichs 12a entspricht. Wird dann die Betätigungskraft F₁ erzeugt und der Kraftspeicher 46a im radial inneren Bereich 58a seiner Federzungen durch das Betätigungsorgan 68a beaufschlagt, so verschwenkt er entgegen seiner Vorspannung mit seinem radial äußeren Bereich 58a auf das Zwischenscheibenelement 26a zu und nimmt dabei die Anpressplatte 42a mit. Der Kupplungsbereich 12a wird somit in seinen eingerückten Zustand gebracht. Da bei dieser Ausgestaltungsform die Betätigungskraft F₁ weiterhin der Betätigungskraft F₂ für den zweiten Kupplungsbereich 14a entgegengesetzt gerichtet ist, wird auch hier der vorangehend beschriebene Effekt der gegenseitigen Kraftkompensation genutzt.

Es sei darauf hingewiesen, dass selbstverständlich auch der zweite Kupplungsbereich 14a als ein derartiger normalerweise offener Kupplungsbereich ausgebildet werden kann, bei welchem bei Erzeugung der Betätigungskraft F₂ dann durch Überwindung der Vorspannung des Kraftspeichers die Anpressplatte 44a gegen die Reibbeläge 40a der Kupplungsscheibe 38a gepresst wird. Um dabei die Richtung der Betätigungskraft F₂ beibehalten zu können, wäre auch hier wieder die radiale Relativlage der beiden Abstützpunkte am Gehäuseabschlussteil 28a und der Anpressplatte 44a andererseits bezüglich der in Fig. 5 dargestellten Positionierung umzukehren, so dass auch der Kraftspeicher 48a in seinem radial mittleren Bereich durch Distanzbolzen o. dgl. am Gehäuse 16a gehalten ist.

Grundsätzlich kann auch bei beiden Kupplungsbereichen 12a, 14a das in Fig. 1 angewandte Kupplungsprinzip einer jeweils gezogenen Kupplung bei in ihre Ausrücklage vorgespannten Kraftspeichern beibehalten werden, wobei dann die beiden durch die Betätigungsorgane 68 bzw. 78 eingeleiteten Betätigungskräfte F₁ bzw. F₂ jeweils in genau umgekehrter Richtung gerichtet wären.

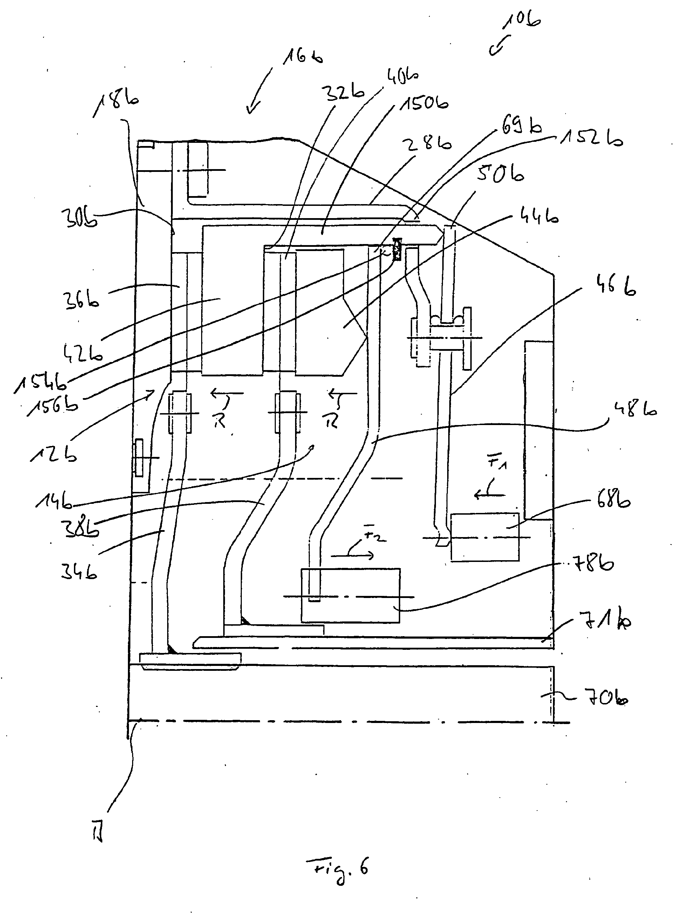

Eine weitere Ausgestaltungsform einer erfindungsgemäßen Doppelkupplungsanordnung ist in Fig. 6 dargestellt. Komponenten, welche vorangehend beschriebenen Komponenten hinsichtlich Aufbau bzw. Funktion entsprechen, sind mit dem gleichen Bezugszeichen unter Hinzufügung eines Anhangs "b" bezeichnet.

Man erkennt in Fig. 6, dass nunmehr für beide Kupplungsbereiche 12b, 14b die Anpressplatten 42b, 44b zur Herstellung des jeweiligen Einrückzustands in der gleichen Richtung R, nämlich in der Darstellung der Fig. 6 nach links, zu verschieben sind. Das Gehäuse 16b bildet nunmehr beispielsweise mit seinem Eingangsteil 18b, welches z.B. als Sekundärmasse eines Zweimassenschwungrads ausgestaltet sein kann, die Widerlagerfläche 30b für den Kupplungsbereich 12b. Die Anpressplatte 42b des ersten Kupplungsbereichs 12b bildet nunmehr mit ihrer von den Reibbelägen 36b abgewandten Seite die Widerlagerfläche 32b für die Reibbeläge 40b der Kupplungsscheibe 38b des zweiten Kupplungsbereichs 14b.

Die Anpressplatte 42b ist näherungsweise topfförmig ausgebildet und weist einen axial sich erstreckenden Bereich oder einzelne Bereiche 150b auf, die jeweilige Öffnungen 152b in dem Gehäuseteil 28b axial durchsetzen und durch den radial äußeren Bereich 50b des nunmehr an der Außenseite des Gehäuses 16b gehaltenen Kraftspeichers 46b des ersten Kupplungsbereichs 12b beaufschlagt sind. Der Kraftspeicher 48b des zweiten Kupplungsbereichs 14b ist in seinem radial äußeren Bereich 69b beispielsweise unter Zwischenlagerung eines Drahtrings 154b o. dgl. an einem Sicherungselement 1 56b axial abgestützt, das wiederum an dem oder den Abschnitten 150b axial festgehalten ist.

Sind beide Kraftspeicher 46b, 48b freigegeben, so sind beide Kupplungsbereiche 12b, 14b im eingerückten Zustand. Wird durch Erzeugung der Betätigungskraft F₁ vermittels eines dem ersten Kupplungsbereich 12b zugeordneten Betätigungsmechanismus, beispielsweise hydraulischen oder mechanischen Betätigungsmechanismus, wiedergegeben durch das Betätigungsorgan 68b, der Kraftspeicher 46b, d.h. die Membranfeder 46b beaufschlagt, so gibt dieser Kraftspeicher 46b radial außen die Anpressplatte 42b frei und diese kann beispielsweise bedingt durch eine Lüftkrafterzeugungsanordnung, z.B. Tangentialblattfedern, axial von der Kupplungsscheibe 34b abheben. Dabei wird dieser Kupplungsbereich 12b dann in seinen Ausrückzustand gebracht. Bei dieser zumindest geringfügigen Axialbewegung der Anpressplatte 42b wird der gesamte zweite Kupplungsbereich 14b, welcher noch in seinem Einrückzustand ist, axial mitgenommen. Dies bedeutet, dass die Kupplungsscheibe 38b axial beweglich bezüglich der zugeordneten Getriebeeingangswelle 71 b gehalten sein muss, was im Allgemeinen durch das Vorsehen von Keilverzahnungen der Fall ist. Es muss jedoch auch der Kraftspeicher 48b im Bereich der Wechselwirkung desselben mit dem Betätigungsorgan 78b eine entsprechende Hubbewegung durchführen können. Beispielsweise könnte das Betätigungsorgan 78b ein Ringkolben einer Kolben/Zylinderanordnung sein, die in diesem Zustand, in dem keine Betätigungskraft F₂ zu erzeugen ist, freigegeben ist, so dass das in dem Zylinder vorgesehene Volumen frei und ohne Erzeugung irgend einer wesentlichen Gegenkraft verändert werden kann.

Wird die Betätigungskraft F₁ nicht erzeugt, jedoch die Betätigungskraft F₂, so wird die Anpressplatte 44b freigegeben und der Kupplungsbereich 14 b in seinen Ausrückzustand gebracht. Man erkennt, dass dabei die auf den Kraftspeicher 48b ausgeübte Betätigungskraft F₂ radial außen in den oder die Abschnitte 150b der Anpressplatte 42b eingeleitet und somit auf den Kraftspeicher 46b übertragen wird. Es ist dabei also darauf zu achten, dass der Kraftspeicher 46b hinsichtlich der durch diesen zu erzeugenden Anpresskraft so stark dimensioniert ist, dass die Anpresskraft größer ist als die in dem Kupplungsbereich 12b maximal erforderliche Anpresskraft plus die im Kupplungsbereich 14b maximal erforderliche Ausrückkraft F₂.

Auch bei einer derart ausgestalteten Doppelkupplungsanordnung 10b, ebenso wie bei der in Fig. 5 dargestellten Doppelkupplungsanordnung 10a, kann selbstverständlich ein Verschleißausgleichsmechanismus vorgesehen sein, wie er vorangehend mit Bezug auf die Fig. 3 beschrieben worden ist. Ebenso können selbstverständlich die in den verschiedenen Doppelkupplungsanordnungen vorgesehenen Kupplungsscheiben jeweils mit Torsionsschwingungsdämpfern ausgestattet sein.

Alle vorangehend beschriebenen Doppelkupplungsanordnungen, bei welchen der vorteilhafte Effekt der zumindest teilweisen Kompensation der nach radial außen sich abstützenden Betätigungskräfte auftritt, können in herkömmlicher Art und Weise in einen zwischen dem Motor und dem Getriebe vorgesehenen Bauraum eingegliedert werden. Ebenso ist es natürlich möglich, derartige Doppelkupplungsanordnungen an der vom Motor entfernt liegenden Seite eines Getriebes anzuordnen. Dieser Einbauort hat den Vorteil eines vereinfachten Zugriffs zu dem Bauraum. Weiterhin sind die dort im Betrieb auftretenden Temperaturen oder Temperaturschwankungen deutlich niedriger als im Bereich zwischen Getriebe und Motor. Bei einer derartigen Anordnung wäre beispielsweise durch drei ineinander koaxial laufende Wellen dafür zu sorgen, dass eine dieser Wellen, beispielsweise die innerste, die Antriebskraft liefert, also mit dem Eingangsteil des Gehäuses gekoppelt ist, und die beiden äußeren Wellen dann jeweils die Getriebeeingangswellen bilden, die die Antriebskraft dann in das Getriebe einleiten.

Es sei grundsätzlich darauf hingewiesen, dass beispielsweise bei der in Fig. 1 dargestellten Doppelkupplungsanordnung die Betätigungskräfte der verschiedenen Betätigungsmechanismen bzw. Betätigungsorgane 68, 78 auf die Anpressplatten 42, 44 auch durch Hebelelemente übertragen werden können, welche in ihrem radial äußeren Bereich am Gehäuse abgestützt sind, in ihrem radial mittleren Bereich sich an den jeweiligen Anpressplatten 42, 44 abstützen und radial innen durch die jeweiligen Betätigungsorgane 68, 78 beaufschlagt werden. Im Falle des Kupplungsbereichs 12 wäre dann eine Betätigungskraft durch ziehendes Angreifen an derartigen Hebelelementen, also der Kraft F₁ genau entgegengesetzt gerichtet, zu erzeugen, im Falle des Kupplungsbereichs 14 wäre eine Einrück-Anpresskraft dann durch drückendes Angreifen, also wiederum der Kraft F₂ entgegengesetzt gerichtet, zu erzeugen. Sind dann beide diese Kupplungsbereiche 12, 14 in einen eingerückten Zustand zu bringen oder in einen zumindest teilweise eingerückten Zustand zu bringen, so sind dann wieder die Betätigungskräfte F₁, F₂ einander entgegengesetzt gerichtet. Dieses Prinzip ist selbstverständlich auch dann anwendbar, wenn derartige Hebelelemente in ihrem mittleren Bereich am Gehäuse und radial außen an den Anpressplatten abgestützt sind.

## Patentansprüche

1. Doppelkupplungsanordnung, umfassend:
- einen ersten Kupplungsbereich (12; 12a; 12b), durch welchen wahlweise eine Drehmomentübertragungsverbindung zwischen einem Antriebsglied und einem ersten Abtriebsglied (70; 70a; 70b) herstellbar ist,
- einen zweiten Kupplungsbereich (14; 14a; 14b), durch welchen wahlweise eine Drehmomentübertragungsverbindung zwischen dem Antriebsglied und einem zweiten Abtriebsglied (71; 71a; 71b) herstellbar ist,
- einen dem ersten Kupplungsbereich (12; 12a; 12b) zugeordneten ersten Kraftspeicher (46; 46a; 46b), vorzugsweise Membranfeder,
- einen entgegen der Kraftwirkung des ersten Kraftspeichers (46; 46a; 46b) eine Betätigungskraft (F₁) für den ersten Kupplungsbereich (12; 12a; 12b) erzeugenden ersten Betätigungskraftmechanismus (68; 68a; 68b),
- einen dem zweiten Kupplungsbereich (14; 14a; 14b) zugeordneten zweiten Kraftspeicher (48; 48a; 48b), vorzugsweise Membranfeder,
- einen entgegen der Kraftwirkung des zweiten Kraftspeichers (48; 48a; 48b) eine Betätigungskraft (F₂) für den zweiten Kupplungsbereich (14; 14a; 14b) erzeugenden zweiten Betätigungskraftmechanismus (78; 78a; 78b),
wobei die erste Betätigungskraft (F₁) und die zweite Betätigungskraft (F₂) zueinander im Wesentlichenentgegengesetzt gerichtet sind
**dadurch gekennzeichnet,**
**dass** der erste Kupplungsbereich (12; 12a) eine erste Anpressplatte (42; 42a) aufweist, die zur Herstellung eines Einrückzustands des ersten Kupplungsbereichs (12; 12a) in Richtung eines Zwischenscheibenelementes (26) verlagerbar ist,
**dass** der zweite Kupplungsbereich (14; 14a) eine zweite Anpressplatte (44; 44a) aufweist, die zur Herstellung eines Einrückzustands des zweiten Kupplungsbereichs (14; 14a) in Richtung des Zwischenscheibenelementes (26)verlagerbar ist,
und **dass** einer der Betätigungkraftsmechanismen (68,78; 68a, 78a) ein in einem der Abtriebsglieder (70, 71; 70a, 71a) zur Beaufschlagung des zugehörigen Kraftspeichers (46; 46a) axial bewegbar angeordnetes Betätigungsorgan (68; 68a) aufweist.

2. Doppelkupplungsanordnung nach Anspruch 1,
**dadurch gekennzeichnet**,
die erste Anpressplatte (42; 42a) zur Herstellung eines Einrückzustands des ersten Kupplungsbereichs (12; 12a) in einer ersten Richtung (R₁) verlagerbar ist, dass die zweite Anpressplatte (44; 44a) zur Herstellung eines Einrückzustands des zweiten Kupplungsbereichs (14; 14a) in einer der ersten Richtung (R₁) im Wesentlichen entgegengesetzten zweiten Richtung (R₂) verlagerbar ist,
und dass die erste Betätigungskraft (F₁) im Wesentlichen gleichgerichtet zur ersten Richtung (R₁) ist und die zweite Betätigungskraft (F₂) im Wesentlichen gleichgerichtet zur zweiten Richtung (R₂) ist.

3. Doppelkupplungsanordnung nach Anspruch 1,
**dadurch gekennzeichnet,**
**dass** die erste Anpressplatte (42; 42a) zur Herstellung eines Einrückzustands des ersten Kupplungsbereichs (12; 12a) in einer ersten Richtung (R₁) verlagerbar ist, dass die zweite Anpressplatte (44; 44a) zur Herstellung eines Einrückzustands des zweiten Kupplungsbereichs (14; 14a) in einer der ersten Richtung (R₁) im Wesentlichen entgegengesetzten zweiten Richtung (R₂) verlagerbar ist, und
**dass** die erste Betätigungskraft (F₁) zur ersten Richtung (R₁) im Wesentlichen entgegengesetzt gerichtet ist und die zweite Betätigungskraft (F₂) zur zweiten Richtung (R₂) im Wesentlichen entgegengesetzt gerichtet ist.

4. Doppelkupplungsanordnung nach Anspruch 1,
**dadurch gekennzeichnet,**
**dass** die erste Anpressplatte (42b) zur Herstellung eines Einrückzustands des ersten Kupplungsbereichs (12b) in einer Richtung (R) verlagerbar ist,
**dass** die zweite Anpressplatte (44b) zur Herstellung eines Einrückzustands des zweiten Kupplungsbereichs (14b) in derselben Richtung (R) verlagerbar ist, und
**dass** bei einem der Kupplungsbereiche (12b, 14b) die Betätigungskraft (F₁) zur Richtung (R) gleichgerichtet ist und bei dem anderen der Kupplungsbereiche die Betätigungskraft (F₂) der Richtung (R) entgegengesetzt gerichtet ist.

5. Doppelkupplungsanordnung nach einem der Ansprüche 1 bis 4,
**dadurch gekennzeichnet,**
**dass** bei wenigstens einem der Kupplungsbereiche (12, 14; 12a, 14a; 12b, 14b) die zugehörige Anpressplatte (42, 44; 42a, 44a; 42b, 44b) durch den zugehörigen Kraftspeicher (46, 48; 46a, 48a; 46b, 48b) in eine Einrücklage vorgespannt ist.

6. Doppelkupplungsanordnung nach einem der Ansprüche 1 bis 5,
**dadurch gekennzeichnet,**
**dass** bei wenigstens einem der Kupplungsbereiche (42a, 44a) der zugehörige Kraftspeicher (46a) in eine Ausrücklage vorgespannt ist und durch Erzeugung der entsprechenden Betätigungskraft (F₁) entgegen seiner Vorspannkraft in eine Einrücklage bringbar ist.

7. Doppelkupplungsanordflung nach einem der An sprüche 1 bis 6,
**dadurch gekennzeichnet,**
**dass** einer der Betätigungsmechanismen (68, 78; 68a, 78a) ein in einem der Abtriebsglieder (70, 71; 70a, 71a) zur Beaufschlagung des zugehörigen Kraftspeichers (46; 46a) axial bewegbar angeordnetes Betätigungsorgan (68; 68a) aufweist.

8. Doppelkupplungsanordnung nach einem der Ansprüche 1 bis 7,
**dadurch gekennzeichnet,**
**dass** einer der Betätigungsmechanismen (68, 78; 68a, 78a; 68b; 78b) ein radial außerhalb der Abtriebsglieder (70, 71; 70a, 71a; 70b; 71b), vorzugsweise axial bewegbares Betätigungsorgan aufweist.

9. Doppelkupplungsanordnung nach einem der Ansprüche 1 bis 8,
**dadurch gekennzeichnet,**
**dass** jeder Kupplungsbereich (12, 14; 12a, 14a; 12b, 14b) eine Kupplungsscheibenanordnung (34, 38; 34a, 38a; 34b, 38b) mit wenigstens einem Reibbelagträger umfasst.

10. Doppelkupplungsanordnung nach einem der An sprüche 1 bis 9,
**dadurch gekennzeichnet, dass** wenigstens einer der Kupplungsbereiche (12, 14) mit einer Verschleißkompensationsanordnung (100, 102) versehen ist.

11. Doppelkupplungsanordnung nach einem der Ansprüche 1 bis 10,
**dadurch gekennzeichnet,**
**dass** der erste Betätigungsmechanismus (68; 68a; 68b) und der zweite Betätigungsmechanismus (78; 78a; 78b) reaktionskraftmäßig nicht an der Doppelkupplungsanordnung (10; 10a; 10b) abgestützt sind.

12. Doppelkupplungsanordnung nach einem der Ansprüche 1 bis 11,
**dadurch gekennzeichnet,**
**dass** durch den ersten Betätigungsmechanismus (68; 68a; 68b) und durch den zweiten Betätigungsmechanismus (78; 78a, 78b) jeweils unabhängig vom anderen Betätigungs -mechanismus eine Betätigungskraft (F₁, F₂) erzeugt werden kann.

13. Doppelkupplungsanordnung, umfassend:
- einen ersten Kupplungsbereich (12; 12a; 12b), durch welchen wahlweise eine Drehmomentübertragungsverbindung zwischen einem Antriebsglied und einem ersten Abtriebsglied (70; 70a; 7Db) herstellbar ist;
- einen zweiten Kupplungsbereich (14; 14a; 14b), durch welchen wahlweise eine Drehmomentübertragungsverbindung zwischen dem Antriebsglied und einem zweiten Abtriebsglied (71; 71a; 71b) herstellbar ist;
- einen dem ersten Kupplungsbereich (12; 12a; 12b) zugeordneten ersten Betätigungskraftmechanismus (68; 68a; 68b), dessen Betatigungskraft (F1) über eine Kraftübertragungsanordnung (46; 46a; 46b) in den ersten Kupplungsbereich (12; 12a; 12b) eingeleitet wird;
- einen dem zweiten Kupplungsbereich (14; 14a; 14b) zugeordneten zweiten Betätigungskraftmechanismus (78; 78a; 78b), dessen Betätigungskraft (F₂) über eine zweite Kraftübertragungsanordnung (48; 48a; 48b) in den zweiten Kupplungsbereich (14; 14a; 14b) eingeleitet wird,
**dadurch gekennzeichnet,**
**dass** eine durch den ersten Betätigungsmechanismus (68; 68a; 68b) erzeugte Einrück-Anpresskraft (F₁), einer durch den zweiten Betätigungsmechanismus (78; 78a; 78b) erzeugten zweiten Einrück-Anpresskraft (F₂), im Wesentlichen entgegengesetzt gerichtet ist und dass einer der Betätigungskraftmechanismen (68,78; 68a, 78a) ein in einem der Abtriebsglieder (70, 71; 70a, 71a) zur Beaufschlagung eines zugehörigen Kraftspeichers (46; 46a, 46b, 48, 48a, 48b) axial bewegbar angeordnetes Betätigungsorgan (68; 68a) aufweist.

## Claims

1. Dual clutch arrangement, comprising:
- a first clutch region (12; 12a; 12b), by which optionally a torque transmission connection can be produced between a drive member and a first output member (70; 70a; 70b),
- a second clutch region (14; 14a; 14b), by which optionally a torque transmission connection can be produced between the drive member and a second output member (71; 71a; 71b),
- a first force accumulator (46; 46a; 46b), preferably a diaphragm spring, which is assigned to the first clutch region (12; 12a; 12b),
- a first actuating-force mechanism (68; 68a; 68b) which generates an actuating force (F₁) for the first clutch region (12; 12a; 12b) counter to the force action of the first force accumulator (46; 46a; 46b),
- a second force accumulator (48; 48a; 48b), preferably a diaphragm spring, which is assigned to the second clutch region (14; 14a; 14b),
- a second actuating-force mechanism (78; 78a; 78b) which generates an actuating force (F₂) for the second clutch region (14; 14a; 14b) counter to the force action of the second force accumulator (48; 48a; 48b),
the first actuating force (F₁) and the second actuating force (F₂) being oriented in substantially opposite directions with respect to one another, **characterized in that** the first clutch region (12; 12a) has a first pressure plate (42; 42a) which can be displaced in the direction of an intermediate disc element (26) in order to produce an engaged state of the first clutch region (12; 12a), **in that** the second clutch region (14; 14a) has a second pressure plate (44; 44a) which can be displaced in the direction of the intermediate disc element (26) in order to produce an engaged state of the second clutch region (14; 14a), and **in that** one of the actuating-force mechanisms (68, 78; 68a, 78a) has an actuating element (68; 68a) which is arranged in an axially movable manner in one of the output members (70, 71; 70a, 71a) for loading the associated force accumulator (46; 46a).

2. Dual clutch arrangement according to Claim 1, **characterized in that** the first pressure plate (42; 42a) can be displaced in a first direction (R₁) in order to produce an engaged state of the first clutch region (12; 12a), **in that** the second pressure plate (44; 44a) can be displaced in a second direction (R₂) which is substantially opposite to the first direction (R₁) in order to produce an engaged state of the second clutch region (14; 14a), and **in that** the first actuating force (F₁) is oriented in substantially the same direction as the first direction (R₁) and the second actuating force (F₂) is oriented in substantially the same direction as the second direction (R₂).

3. Dual clutch arrangement according to Claim 1, **characterized in that** the first pressure plate (42; 42a) can be displaced in a first direction (R₁) in order to produce an engaged state of the first clutch region (12; 12a), **in that** the second pressure plate (44; 44a) can be displaced in a second direction (R₂) which is substantially opposite to the first direction (R₁) in order to produce an engaged state of the second clutch region (14; 14a), and **in that** the first actuating force (F₁) is oriented so as to be substantially opposite to the first direction (R₁), and the second actuating force (F₂) is oriented so as to be substantially opposite to the second direction (R₂) .

4. Dual clutch arrangement according to Claim 1, **characterized in that** the first pressure plate (42b) can be displaced in one direction (R) in order to produce an engaged state of the first clutch region (12b), **in that** the second pressure plate (44b) can be displaced in the same direction (R) in order to produce an engaged state of the second clutch region (14b), and **in that**, in one of the clutch regions (12b, 14b), the actuating force (F₁) is oriented in the same direction as the direction (R) and, in the other of the clutch regions, the actuating force (F₂) is oriented in the opposite direction to the direction (R).

5. Dual clutch arrangement according to one of Claims 1 to 4, **characterized in that**, in at least one of the clutch regions (12, 14; 12a, 14a; 12b, 14b), the associated pressure plate (42, 44; 42a, 44a; 42b, 44b) is prestressed into an engagement position by the associated force accumulator (46, 48; 46a, 48a; 46b, 48b).

6. Dual clutch arrangement according to one of Claims 1 to 5, **characterized in that**, in at least one of the clutch regions (42a, 44a), the associated force accumulator (46a) is prestressed into a disengagement position and can be brought into an engagement position counter to its prestressing force by generation of the corresponding actuating force (F₁).

7. Dual clutch arrangement according to one of Claims 1 to 6, **characterized in that** one of the actuating mechanisms (68, 78; 68a, 78a) has an actuating element (68; 68a) which is arranged in an axially movable manner in one of the output elements (70, 71; 70a, 71a) in order to load the associated force accumulator (46; 46a).

8. Dual clutch arrangement according to one of Claims 1 to 7, **characterized in that** one of the actuating mechanisms (68, 78; 68a, 78a; 68b; 78b) has an actuating element which can be moved radially outside the output members (70, 71; 70a, 71a; 70b; 71b), preferably axially.

9. Dual clutch arrangement according to one of Claims 1 to 8, **characterized in that** each clutch region (12, 14; 12a, 14a; 12b, 14b) comprises a clutch disc arrangement (34, 38; 34a, 38a; 34b, 38b) having at least one friction-lining carrier.

10. Dual clutch arrangement according to one of Claims 1 to 9, **characterized in** at that least one of the clutch regions (12, 14) is provided with a wear compensation arrangement (100, 102).

11. Dual clutch arrangement according to one of Claims 1 to 10, **characterized in that** the first actuating mechanism (68; 68a; 68b) and the second actuating mechanism (78; 78a; 78b) are not supported on the dual clutch arrangement (10; 10a; 10b) in terms of reaction force.

12. Dual clutch arrangement according to one of Claims 1 to 11, **characterized in that** an actuating force (F₁, F₂) can be generated by the first actuating mechanism (68; 68a; 68b) and by the second actuating mechanism (78; 78a, 78b), in each case independently of the other actuating mechanism.

13. Dual clutch arrangement, comprising:
- a first clutch region (12; 12a; 12b), by which optionally a torque transmission connection can be produced between a drive member and a first output member (70; 70a; 70b);
- a second clutch region (14; 14a; 14b), by which optionally a torque transmission connection can be produced between the drive member and a second output member (71; 71a; 71b);
- a first actuating-force mechanism (68; 68a; 68b) which is assigned to the first clutch region (12; 12a; 12b) and the actuating force (F₁) of which is introduced via a force transmission arrangement (46; 46a; 46b) into the first clutch region (12; 12a; 12b);
- a second actuating-force mechanism (78; 78a; 78b) which is assigned to the second clutch region (14; 14a; 14b) and the actuating force (F₂) of which is introduced via a second force transmission arrangement (48; 48a; 48b) into the second clutch region (14; 14a; 14b),
**characterized in that** an engagement pressure force (F₁) which is generated by the first actuating mechanism (68; 68a; 68b) is oriented in substantially the opposite direction to a second engagement pressure force (F₂) which is generated by the second actuating mechanism (78; 78a; 78b), and **in that** one of the actuating-force mechanisms (68, 78; 68a, 78a) has an actuating element (68; 68a) which is arranged in an axially movable manner in one of the output members (70, 71; 70a, 71a) for loading an associated force accumulator (46; 46a, 46b, 48, 48a, 48b).

## Revendications

1. Ensemble d'embrayage double, comprenant :
- une première région d'embrayage (12 ; 12a ; 12b), qui permet de réaliser sélectivement une liaison de transmission de couple entre un organe menant et un premier organe mené (70 ; 70a ; 70b),
- une deuxième région d'embrayage (14 ; 14a ; 14b), qui permet de réaliser sélectivement une liaison de transmission de couple entre l'organe menant et un deuxième organe mené (71 ; 71a ; 71b),
- un premier accumulateur de force (46 ; 46a ; 46b), de préférence un ressort diaphragme, associé à la première région d'embrayage (12 ; 12a ; 12b),
- un premier mécanisme de force d'actionnement (68 ; 68a ; 68b), produisant à l'encontre de l'action du premier accumulateur de force (46 ; 46a ; 46b) une force d'actionnement (F₁) pour la première région d'embrayage (12 ; 12a ; 12b),
- un deuxième accumulateur de force (48; 48a; 48b), de préférence un ressort diaphragme, associé à la deuxième région d'embrayage (14 ; 14a; 14b),
- un deuxième mécanisme de force d'actionnement (78 ; 78a ; 78b), produisant à l'encontre de l'action du deuxième accumulateur de force (48 ; 48a ; 48b) une force d'actionnement (F₂) pour la deuxième région d'embrayage (14 ; 14a ; 14b),
sachant que la première force d'actionnement (F₁) et la deuxième force d'actionnement (F₂) sont dirigées dans des sens mutuellement essentiellement opposés,
**caractérisé**
**en ce que** la première région d'embrayage (12; 12a) présente un premier plateau de pression (42 ; 42a), qui peut être déplacé en direction d'un élément formant disque intermédiaire (26) afin de réaliser un état embrayé de la première région d'embrayage (12 ; 12a),
**en ce que** la deuxième région d'embrayage (14 ; 14a) présente un deuxième plateau de pression (44 ; 44a), qui peut être déplacé en direction de l'élément formant disque intermédiaire (26) afin de réaliser un état embrayé de la deuxième région d'embrayage (14 ; 14a),
et **en ce qu'**un des mécanismes de force d'actionnement (68, 78 ; 68a, 78a) présente un organe d'actionnement (68 ; 68a) disposé à déplacement axial dans un des organes menés (70, 71 ; 70a, 71a) afin de solliciter l'accumulateur de force associé (46 ; 46a).

2. Ensemble d'embrayage double selon la revendication 1, **caractérisé**
**en ce que** le premier plateau de pression (42 ; 42a) peut être déplacé dans une première direction (R₁) afin de réaliser un état embrayé de la première région d'embrayage (12 ; 12a),
**en ce que** le deuxième plateau de pression (44 ; 44a) peut être déplacé dans une deuxième direction (R₂), essentiellement opposée à la première direction (R₁), afin de réaliser un état embrayé de la deuxième région d'embrayage (14 ; 14a),
et **en ce que** la première force d'actionnement (F₁) est dirigée essentiellement dans le même sens que la première direction (R₁), et la deuxième force d'actionnement (F₂) est dirigée essentiellement dans le même sens que la deuxième direction (R₂).

3. Ensemble d'embrayage double selon la revendication 1, **caractérisé**
**en ce que** le premier plateau de pression (42; 42a) peut être déplacé dans une première direction (R₁) afin de réaliser un état embrayé de la première région d'embrayage (12 ; 12a),
**en ce que** le deuxième plateau de pression (44 ; 44a) peut être déplacé dans une deuxième direction (R₂), essentiellement opposée à la première direction (R₁), afin de réaliser un état embrayé de la deuxième région d'embrayage (14 ; 14a),
et **en ce que** la première force d'actionnement (F₁) est dirigée en sens essentiellement opposé à la première direction (R₁), et la deuxième force d'actionnement (F₂) est dirigée en sens essentiellement opposé à la deuxième direction (R₂).

4. Ensemble d'embrayage double selon la revendication 1, **caractérisé**
**en ce que** le premier plateau de pression (42b) peut être déplacé dans une direction (R) afin de réaliser un état embrayé de la première région d'embrayage (12b),
**en ce que** le deuxième plateau de pression (44b) peut être déplacé dans la même direction (R) afin de réaliser un état embrayé de la deuxième région d'embrayage (14b),
et **en ce que**, pour l'une des régions d'embrayage (12b, 14b), la force d'actionnement (F₁) est dirigée dans le même sens que la direction (R) et, pour l'autre région d'embrayage, la force d'actionnement (F₂) est dirigée en sens opposé à la direction (R).

5. Ensemble d'embrayage double selon l'une quelconque des revendications 1 à 4, **caractérisé en ce que**, pour au moins l'une des régions d'embrayage (12, 14 ; 12a, 14a; 12b, 14b), le plateau de pression associé (42, 44 ; 42a, 44a ; 42b, 44b) est précontraint dans une position embrayée par l'accumulateur de force associé (46, 48 ; 46a, 48a ; 46b, 48b).

6. Ensemble d'embrayage double selon l'une quelconque des revendications 1 à 5, **caractérisé en ce que**, pour au moins l'une des régions d'embrayage (42a, 44a), l'accumulateur de force associé (46a) est précontraint dans une position débrayée et peut être amené dans une position embrayée en produisant la force d'actionnement correspondante (F₁) à l'encontre de sa force de précontrainte.

7. Ensemble d'embrayage double selon l'une quelconque des revendications 1 à 6, **caractérisé en ce que** l'un des mécanismes d'actionnement (68, 78 ; 68a, 78a) présente un organe d'actionnement (68 ; 68a) disposé à déplacement axial dans un des organes menés (70, 71 ; 70a, 71a) afin de solliciter l'accumulateur de force associé (46 ; 46a).

8. Ensemble d'embrayage double selon l'une des revendications 1 à 7, **caractérisé en ce que** l'un des mécanismes d'actionnement (68, 78 ; 68a, 78a ; 68b ; 78b) présente un organe d'actionnement pouvant être déplacé, de préférence axialement, radialement à l'extérieur des organes menés (70, 71; 70a, 71a ; 70b ; 71b).

9. Ensemble d'embrayage double selon l'une quelconque des revendications 1 à 8, **caractérisé en ce que** chaque région d'embrayage (12, 14 ; 12a, 14a ; 12b, 14b) comprend un ensemble de disques d'embrayage (34, 38 ; 34a, 38a ; 34b, 38b) doté d'au moins un porte-garniture.

10. Ensemble d'embrayage double selon l'une quelconque des revendications 1 à 9, **caractérisé en ce qu'**au moins l'une des régions d'embrayage (12, 14) est pourvue d'un dispositif de compensation d'usure (100, 102).

11. Ensemble d'embrayage double selon l'une quelconque des revendications 1 à 10, **caractérisé en ce que** le premier mécanisme de force d'actionnement (68 ; 68a ; 68b) et le deuxième mécanisme de force d'actionnement (78 ; 78a ; 78b) ne sont pas soutenus contre l'ensemble d'embrayage double (10 ; 10a ; 10b) en matière de force de réaction.

12. Ensemble d'embrayage double selon l'une quelconque des revendications 1 à 11, **caractérisé en ce que** le premier mécanisme de force d'actionnement (68 ; 68a ; 68b) et le deuxième mécanisme de force d'actionnement (78 ; 78a ; 78b) peuvent respectivement produire une force d'actionnement (F₁, F₂) indépendamment de l'autre mécanisme de force d'actionnement.

13. Ensemble d'embrayage double, comprenant:
- une première région d'embrayage (12 ; 12a; 12b), qui permet de réaliser sélectivement une liaison de transmission de couple entre un organe menant et un premier organe mené (70 ; 70a ; 70b) ;
- une deuxième région d'embrayage (14 ; 14a ; 14b), qui permet de réaliser sélectivement une liaison de transmission de couple entre l'organe menant et un deuxième organe mené (71 ; 71a ; 71b) ;
- un premier mécanisme de force d'actionnement (68; 68a; 68b), associé à la première région d'embrayage (12 ; 12a ; 12b) et dont la force d'actionnement (F₁) est introduite dans la première région d'embrayage (12 ; 12a ; 12b) par l'intermédiaire d'un ensemble de transmission de force (46 ; 46a ; 46b) ;
- un deuxième mécanisme de force d'actionnement (78 ; 78a ; 78b), associé à la deuxième région d'embrayage (14 ; 14a ; 14b) et dont la force d'actionnement (F₂) est introduite dans la deuxième région d'embrayage (14 ; 14a ; 14b) par l'intermédiaire d'un deuxième ensemble de transmission de force (48 ; 48a ; 48b) ;
**caractérisé**
**en ce qu'**une force de pression d'embrayage (F₁) produite par le premier mécanisme de force d'actionnement (68 ; 68a ; 68b) est dirigée en sens essentiellement opposé à une deuxième force de pression d'embrayage (F₂) produite par le deuxième mécanisme de force d'actionnement (78 ; 78a ; 78b), et en ce que 1" un des mécanismes de force d'actionnement (68, 78 ; 68a, 78a) présente un organe d'actionnement (68 ; 68a) disposé à déplacement axial dans un des organes menés (70, 71 ; 70a, 71a) afin de solliciter un accumulateur de force associé (46 ; 46a, 46b, 48, 48a, 48b).
